# NEW EUROPEAN PATENT SPECIFICATION

(11) **EP 3 269 832 B2**
(45) Date of publication and mention of the opposition decision: **19.10.2022**
(45) Mention of the grant of the patent: 02.10.2019
(21) Application number: 16761102.9
(22) Date of filing: 09.03.2016
(51) Int. Cl.: C22B 7/00, C22B 23/00, C22B 47/00, H01M 10/54, C22B 23/02

(54) **METHOD OF RECYCLING AND PROCESSING WASTE BATTERY**
VERFAHREN ZUM RECYCELN UND VERARBEITEN VON ALTBATTERIEN
PROCÉDÉ DE RECYCLAGE ET DE TRAITEMENT D'UNE BATTERIE USAGÉE

(30) Priority: 11.03.2015 CN 201510105916; 11.03.2015 CN 201510105915
(43) Date of publication of application: 17.01.2018
(73) Proprietor: Changsha Research Institute Of Mining And Metallurgy Co., Ltd., Changsha, Hunan 410012 (CN)
(72) Inventor: XIAO, Songwen, Changsha Hunan 410012 (CN); REN, Guoxing, Changsha Hunan 410012 (CN); PAN, Bing, Changsha Hunan 410012 (CN); FAN, Youqi, Changsha Hunan 410012 (CN); XIA, Xing, Changsha Hunan 410012 (CN)
(74) Representative: AWA Sweden AB
(86) International application number: PCT/CN2016/075924
(87) International publication number: WO 2016/141875

(56) References cited:
- WO-A1-2013/080266
- CN-A- 103 924 088
- CN-A- 104 388 684
- CN-A- 104 674 013
- CN-A- 104 789 778
- JP-A- 2012 102 350
- JP-A- 2012 193 424
- JP-A- 2013 091 826
- JP-A- 2013 237 907
- US-A1- 2012 240 729
- US-A1- 2014 069 234
- ELWERT T ET AL: "Phase composition of high lithium slags from the recycling of lithium ion batteries", WORLD OF METALLURGY - ERZMET, GDMB - MEDIENVERLAG, CLAUSTHAL-ZELLERFELD, DE, vol. 65, no. 3, 1 May 2012 (2012-05-01), pages 163-171, XP009185147, ISSN: 1613-2394
- E. HACCURIA ET AL.: "Phase equilibria studies of the ''Mn0''-AI203-Si02 system in equilibrium with metallic alloy. Part 1: Development of the technique and determination of liquidus isotherms between 1423 K and 1523 K", INT. J. MAT. RES., vol. 105, 2014, pages 941 - 952, DOI: 10.3139/146.111110
- E HACCURIA, ET AL: "Phase equilibria studies of the ''MnO''-Al2O3-SiO2 system in equilibrium with metallic alloy. Part 2: phase equilibria", INTERNATIONAL JOURNAL OF MATERIALS RESEARCH, vol. 106, 1 January 2015 (2015-01-01), DE, pages 1 - 11, ISSN: 1862-5282
- Alcock C.B.: Principles ot Pyrometallurgy,.London/New York/San Francisco, 1976, p. 13.-18
- Richardson F.D.; Jeffes J.H.E.:"The Thermodynamics of Substances of Interest in Iron and Steel Making from 0°C to 2400°C ?.Journal of the iron and Steel institute, vol 160, 1948; p: 261 -270

## Description

### TECHNICAL FIELD

The disclosure relates to the technical field of resource recycling and environmental protection, and more particularly, to a method for recycling and treating a waste lithium-ion battery and related materials.

### BACKGROUND

At present, a lithium-ion battery has been widely applied to mobile phones, MP3, cameras and other portable digital devices due to its advantages of high energy density, high working voltage, no memory effect and the like. Along with upgrade and replacement of digital products, a large number of waste aluminum-shell lithium-ion batteries are generated. Lithium-ion batteries is rich in valuable metals like cobalt, nickel and copper, among which contents of the cobalt and the nickel are up to 10 wt.%. An improper treatment of a large number of the waste lithium-ion batteries not only causes a tremendous waste of resources, but also causes a serious environmental problem resulting from the rich heavy metals and organic matters. Thus, it is very necessary to develop an advanced waste battery recycling technology.

Furthermore, in light of differences in materials of positive electrodes and shells of the waste lithium-ion batteries, differences in the constituent components and the recycling values are significant. For example, as for a steel-shell lithium-ion battery, the Fe content is up to 30% and the Al content is only about 5%; and as for an aluminum-shell lithium-ion battery, the Al content is up to 30% but Fe is almost zero. At present, compact batteries adopted by the portable digital devices are mainly made of lithium cobalt oxide, lithium nickel cobalt oxide or nickel-cobalt-manganese/aluminum ternary positive electrode materials, in which the cobalt and the nickel contents are high but the manganese content is low, and the recycling value is high. However, with the development of electric vehicle industry, the nickel-cobalt-manganese ternary positive electrode material with the features of high efficiency, large capacity (≥ 150mAh/g), long service life (> 2000 times), high safety and the like is doomed to be widely applied, which will profoundly changes the constituent components and the recycling values of the existing waste lithium-ion batteries. An investigation shows that a production output of a lithium nickel cobalt manganese oxide ternary material is 23,000 tons in 2013, with an increase of more than 50% as compared with that in 2012. Therefore, there is a need for a developed lithium-ion battery recycling technology to adapt to a change in the constituent components of battery materials under a new circumstance.

At present, the waste lithium-ion battery recycling and treating technology mainly focuses on recycling valuable metals such as cobalt, nickel and copper, and the specific process thereof includes two types, namely a wet process and a pyrogenic process. The wet process includes steps of disassembly, separation, solution purification, metal extraction, etc., in which the typical process has been disclosed in US patent documents such as US5888463, and its advantages are that the product quality is good and the environmental impact is controllable. However, the wet treatment process is mainly directed at treating a material having a special constituent, cannot adapt to an abrupt change in battery components, and thus generates a large amount of wastewater and unstable waste residue, which very easily lead to a secondary environmental pollution. The pyrogenic process is to perform a high-temperature slagging and smelting treatment on a waste battery or its disassembled materials, in which the valuable metals such as cobalt, nickel and copper are enriched into an alloy and separated from a slag, and then the alloy is further treated to recycle the cobalt, nickel and copper therein. At present, the typical process can be referred to a US patent document with Publication No. US2005/023575A1, and to Chinese patent documents with Publication No. CN103526035A, CN103924088A, CN103370427A, CN103459623A, CN103380218A and CN103459624A. The above-mentioned pyrogenic smelting treatment process of the waste lithium-ion battery has the advantages that the raw material treating capacity is large, the operation is relatively simple, the generated slag is structurally stable, and there is no secondary pollution, etc.

JP2012193424A relates to a method for recovering manganese alloy from manganese oxide waste and waste derived from the positive electrode material of a lithium ion secondary battery.

US2012240729A1 relates to a recycling process for recovery of metals from Li-ion batteries.

ELWERT T ET AL investigated the phase composition of different lithium containing slags from the recycling of lithium ion batteries (ELWERT T ET AL: "Phase composition of high lithium slags from the recycling of lithium ion batteries", WORLD OF METALLURGY - ERZMET, GDMB - MEOIENVERLAG, CLAUSTHAL- ZELLERFELO, DE, vol. 65, no. 3, 1 May 2012, pages 163-171).

However, the above processes all are treatment processes directing at a waste Mn-free lithium ion battery, and thus cannot solve the problems related to the recycling and treating for a large number of the waste Mn-containing lithium ion batteries. Additionally, the above processes adopt CaO-Al₂O₃-SiO₂ ternary, FeO-CaO-SiO₂-Al₂O₃ quaternary and FeO-SiO₂-Al₂O₃ ternary slag-type smeltings, in which the contents of the valuable metals in the slag phase are extremely low, and thus the slag basically has no recycle value and can be only used as a building material. Hence, the economic benefits of these processes need to be further improved.

### SUMMARY

The technical problem to be solved by the disclosure is to overcome the deficiencies and the defects mentioned in the Background, and to provide a method for recycling and treating a waste battery having a higher comprehensive economic benefit and a better environmental benefit.

To solve the above technical problems, methods according to the appended claims are provided.

According to different types of the waste batteries and different elemental components contained in the waste batteries, the methods for recycling and treating the waste battery are specifically classified into the following two types.

The first one is a method according to appended claim 3.

The method for recycling and treating the waste Co and/or Ni containing battery in the disclosure is mainly based on the following thought. In the method for recycling and treating the waste Co and/or Ni containing battery, a new MnO-SiO₂-Al₂O₃ ternary smelting slag type is adopted. Compared with the existing conventionally adopted CaO-SiO₂-Al₂O₃ slag type or FeO-SiO₂-Al₂O₃ slag type, materials of the corresponding slagging agent of the disclosure neither necessarily contain CaO nor necessarily contain Fe. More importantly, the slag of the disclosure contains a great number of Mn, whereas the existing smelting slag hardly contains Mn or the Mn content is very low (≤ 10% of Mn, the existing slag generally can be only used as a building material). Based on our latest research results, in the new smelting slag type adopted, the main components of the slag are MnO, SiO₂ and Al₂O₃. Since the battery almost has no Mn and Si in itself, effective slagging elements of the added slagging agent need to contain Mn and Si. Moreover, to reduce the amount of the slagging agent and improve the economy of the process, the added slagging agent has to at least contain 10 wt.% of Mn and Si. Additionally, the generated slag has a high MnO content and a low Fe content, which is beneficial for recycling Mn in the subsequent slag, achieving the reutilization of the slag, improving the value of the slag and further improving the economy of the process. According to the technical solution herein, the waste Co and/or Ni containing battery is mixed with the Mn and Si containing slagging agent, and preferably, a small amount of metallurgical coke may be added into the smelting furnace (preferably an electric furnace) together. By controlling appropriate oxygen partial pressure in the furnace, at least 90% of Co and/or Ni and at least 90% of Fe in the mixture enter into the alloy, almost all of Si and a majority of Mn enter into the slag in an oxide form, and the high-valence manganese oxides (such as MnO₂) in the raw materials are converted into the low-valence manganese oxides (such as MnO). The oxygen partial pressure in the furnace is controlled by means of adjusting the amount of a reducing agent (metallurgical coke or metal aluminum in the battery) and/or an oxidizing agent (oxygen or metal oxides) in the materials added to the furnace. Through analyzing components in the generated alloy and slag, an appropriate oxygen partial pressure may be determined. Under the appropriate oxygen partial pressure, the slag contains ≥ 15 wt.% of Mn, ≤ 5 wt.% of Fe, and ≤ 30 wt.% of Al₂O₃, and 0.2 ≤ Mn/SiO₂ ≤ 3.0.

In the above method for recycling and treating the waste Co and/or Ni containing battery, the waste Co and/or Ni containing battery has almost no manganese element and includes waste batteries such as waste lithium-ion battery and waste nickel metal hydride battery. However, in the disclosure, the method is preferably applied to the waste lithium-ion battery. The waste lithium-ion battery refers to an abandoned or ineffective lithium-ion battery, a battery packing material or other battery products, without taking the integrity of a machine or an electric energy thereof into consideration. In specific, it may be a waste lithium-ion battery containing one or more of Cu, Co and Ni or a waste material generated in waste lithium-ion battery production and manufacturing. The waste lithium-ion battery preferably includes one or more of a waste aluminum-shell lithium-ion battery, a waste polymer lithium-ion battery and a waste steel-shell lithium-ion battery.

In the above method for recycling and treating the waste Co and/or Ni containing battery, since only the Mn and Si (as effective slagging elements) containing slagging agent is added in the disclosure, the Mn-containing slag generated from the smelting mainly consists of tephroite , while the Fe content in the Mn-containing slag is low, that is, ≤ 5%. During the smelting process, on one hand, the MnO₂ containing the slagging agent which is hardly leached by sulfuric acid, is converted into MnO, which is easily leached by sulfuric acid; and on the other hand, 90% or more of Fe contained in the smelting materials enter into the alloy, the generated Mn-containing slag contains ≤ 5% of Fe. This can reduce the burden for the purifying and deironing of the leaching solution containing Mn, which is beneficial for recycling the manganese in the subsequent slag. Furthermore, in the case that the Al₂O₃ content in the slag is up to 25%, the flowability of the slag is still high under the condition that the smelting temperature exceeds 1400°C, which indicates that the disclosure is very suitable for treating the waste lithium-ion battery with a high aluminum content (e.g., ≥ 5wt.% of Al), e.g., the waste aluminum-shell lithium-ion battery or the waste polymer lithium-ion battery may have about 10% of Al (e.g., 8-15%). As for the treatment of such waste battery having the high aluminum content, since the dissolving capacity of Al₂O₃ in the slag is high, the amount of the slagging agent can be effectively reduced, and the treatment cost of the process can be reduced, accordingly.

In the above method for recycling and treating the waste Co and/or Ni containing battery, if a Si-containing material is only added to the slagging agent, it is difficult to generate a manganese-rich slag with a high Mn content (≥ 25% of Mn) by one-step smelting. However, if Mn and Si are contained simultaneously in the slagging agent, it may be easier to generate the manganese-rich slag with the high Mn content. Hence, the effective slagging elements in the slagging agent include Mn and Si, simultaneously. Although there is no Fe additionally added to the slagging agent, it is generally inevitable for the slagging agent to contain a small amount of Fe. Since the MnO-SiO₂-Al₂O₃ slag type is adopted by the smelting process of the disclosure, under the effect of a reductive atmosphere on the slag, Fe oxides in the materials will be reduced to metal iron so as to enter into the alloy and the Fe content in the slag may be controlled at 5% or less, which clearly shows that Fe is not a main component of the slag and does not affect the main properties of the slag. In addition, by improving the content of the effective slagging element Si in the slagging agent, the amount of the slagging agent can be obviously reduced, and the economy of the process is improved.

In the method for recycling and treating the waste Co and/or Ni containing battery, more preferably, a manganese ore is taken as the slagging agent; and further preferably, the manganese ore contains ≥ 10% of Mn and ≥ 5% of Fe. In a general manganese ore, compared with the Mn content, the Fe content is relatively high and greater than 5% or more, and thus it is difficult to recycle the manganese therein economically and effectively. The existing technology widely adopts a hydrometallurgical process. Firstly, the manganese ore is leached by sulfuric acid, and then purified to remove impurities. Finally, the the manganese is recovered via an electrolysis process. However, since high-valence manganese (such as MnO₂) in the manganese ore is insoluble in sulfuric acid media, the manganese ore is difficult to leach. To improve the leaching rate of the manganese ore, the following two measures are generally adopted. 1) The reducing agent such as pyrite and ferrous sulfate is added to the sulfuric acid system, in which the high-valence manganese is converted into a low-valence manganese (Mn²⁺). However, the manganese leaching solution in the method contains a lot of Fe, and the subsequent deironing burden of the leaching solution is troublesome. 2) A reductive roasting process is employed, in which high-valence manganese oxides are reduced to low-valence manganese oxides preliminarily and then leached with the sulfuric acid. In this method, not only a amount of energy, but also complex process control conditions are needed.Roasting the ore needs to isolate air and cool quickly, to avoid a secondary oxidation of the manganese. In the disclosure, by taking such manganese ore as the slagging agent of the process, on one hand, the high-valence manganese oxides (MnO₂) in the manganese ore are reduced in the smelting process by carbon and metals in the battery to MnO, which can be dissolved by the sulfuric acid; and on the other hand, the metal aluminum in the battery is oxidized into Al₂O₃. The MnO and the Al₂O₃ formed by the conversion are slagged with the SiO₂ in the slagging agent together, such that the MnO-SiO₂-Al₂O₃ slag is formed. In addition, at least 90% of Fe in the manganese ore is reduced and enters into the alloy phase, such that the manganese content in the generated slag may be significantly improved and up to 25% or more, and the Fe content is significantly reduced and lower than 3%. Owing to such slag with the high manganese content and the low iron content, there is almost no need for the deironing process in a subsequent hydrometallurgical process for extracting manganese. Therefore, the smelting process is very suitable for the subsequent manganese recycling. Therefore, such process recycles not only the valuable metals such as Co, Ni and Cu in the waste battery, but also the Mn containg manganese ore; and thus the comprehensive economic and environmental benefits thereof are more significant. The manganese ore as the slagging agent will bring about a relatively high content of Fe, but this is not conflict with that the Fe is not added to the slagging agent additionally. This is because almost all Fe in the manganese ore enter into the alloy, and the Fe content in the generated slag may be even lower than 3%, which also shows that the Fe is not used as the slagging agent and does not affect the main properties of the slag.

In the method for recycling and treating the waste Co and/or Ni containing battery, preferably, the slag contains ≥ 25 wt.% of Mn (more preferably greater than 35 wt.%), ≤ 3wt.% of Fe and 0.8 ≤ Mn/SiO₂ ≤ 2.5. The high-valence manganese oxides in the materials all are converted into low-valence manganese oxides MnO. When the contents of the components in the slag reach to the above ranges and meet the national quality requirement on the manganese-rich slag, and an existing form of the Mn is easy to allow the manganese to be leached and recycled by the wet process, which provides favorable conditions for recycling the subsequent manganese, so that the comprehensive economic advantage of the process is more obvious. In other words, the generated slag and the alloy both are materials rich in the valuable metals and their economic values are very high; and the manganese ore resource and the waste battery are recycled simultaneously.

In the method for recycling and treating the waste Co and/or Ni containing battery, preferably, an addition amount of the slagging agent is 0.25 time or more of the weight of the waste Co and/or Ni containing battery, and may be even 0.4 time or more. Under the premise that the smelting process is ensured to be performed smoothly, the addition amount of the slagging agent is reduced as much as possible, so as to further improve the economic benefit of the process.

In the above method for recycling and treating the waste Co and/or Ni containing battery, a certain amount of CaO contained in the slagging agent may improve the foaming property of the slag, be beneficial to mass and heat transfer of a melt, and improve the smelting effect (i.e., the Mn-containing slag is of a MnO-SiO₂-Al₂O₃-CaO quaternary smelting slag type). However, excessive CaO will accelerate the reduction of Mn, such that the Mn content in the slag is reduced and it is adverse for generating the manganese-rich slag. Therefore, the CaO in the slag is preferably controlled at a reasonable level. According to our repeated studies and experiments, preferably, the slag contains ≤ 15% of CaO and/or CaO/SiO₂ ≤ 0.8; and more preferably, the slag contains ≤10% of CaO and/or CaO/SiO₂ ≤ 0.5. At this moment, it is equivalent to that the MnO-SiO₂-Al₂O₃-CaO quaternary smelting slag type is adopted, but the CaO content is relatively low.

The second one is a method according to appended claim 1.

The method for recycling and treating the waste Mn-containing battery in the disclosure is mainly based on the following thought. In the method for recycling and treating the waste Mn-containing battery, a new MnO-SiO₂-Al₂O₃ ternary smelting slag type is adopted. Compared with the existing conventionally adopted CaO-SiO₂-Al₂O₃ slag type or FeO-SiO₂-Al₂O₃ slag type, materials of the corresponding slagging agent of the disclosure neither necessarily contain CaO nor necessarily contain Fe. More importantly, the slag of the disclosure contains a great number of Mn, whereas the existing smelting slag hardly contains Mn or the Mn content is very low (≤ 10% of Mn, the existing slag generally can be only used as a building material). Based on our latest research achievements, in the new smelting slag type adopted, the main components of the slag are MnO, SiO₂ and Al₂O₃. Since the battery almost has no Si in itself, effective slagging elements of the added slagging agent need to contain Si. Moreover, to reduce the amount of the slagging agent and improve the economy of the process, the added slagging agent has to at least contain 10 wt.% of Si. Additionally, the generated slag has a high MnO content and a low Fe content, which is beneficial for recycling Mn in the subsequent slag, achieving the reutilization effect of the slag, improving the value of the slag and further improving the economy of the process. According to the technical solution herein, the waste Mn-containing battery is mixed with the Si-containing slagging agent, and preferably, a small amount of metallurgical coke may be added into the smelting furnace (preferably an electric furnace) together. By controlling appropriate oxygen partial pressure in the furnace, at least 90% of Co and/or Ni and at least 90% of Fe in the mixture enter into the alloy, almost all of Si and a majority of Mn enters into the slag in an oxide form. The oxygen partial pressure in the furnace is controlled by means of adjusting the amount of a reducing agent (metallurgical coke or metal aluminum in the battery) and/or an oxidizing agent (oxygen or metal oxides) in the materials added to the furnace. Through analyzing components in the generated alloy and slag, an appropriate oxygen partial pressure may be determined. Under the appropriate oxygen partial pressure, the slag contains ≥ 15 wt.% of Mn, ≤ 5 wt.% of Fe, and ≤ 30 wt.% of Al₂O₃, and 0.2 ≤ Mn/SiO₂ ≤ 3.0.

In the above method for recycling and treating the waste Mn-containing battery, the waste Mn-containing battery is a waste lithium-ion battery. The waste lithium-ion battery refers to an abandoned or ineffective lithium-ion battery, a battery packing material or other battery products, without taking the integrity of a machine or an electric energy thereof into consideration. In specific, it may be a waste lithium-ion battery containing one or more of Cu, Co and Ni or a waste material generated in waste lithium-ion battery production and manufacturing. The waste lithium-ion battery preferably includes one or more of a waste aluminum-shell lithium-ion battery, a waste polymer lithium-ion battery and a waste steel-shell lithium-ion battery. According to claim 1, the waste Mn-containing battery is a waste lithium-ion battery containing 15 wt.% or more (may be about 20 wt.%) of Mn, or a mixture of the waste lithium-ion battery and a waste lithium-ion battery containing less than 3 wt.% of Mn.

In the above method for recycling and treating the waste Mn-containing battery, since only the Si (as effective slagging elements) containing slagging agent is added in the disclosure, the Mn-containing slag with tephroite as a main component is generated by smelting and the Fe content in the Mn-containing slag is low, that is, ≤ 5%. On one hand, in the smelting process, 90% or more of Fe contained in the smelting materials enter into the alloy, the generated Mn-containing slag contains ≤ 5% of Fe, which is beneficial for recycling the manganese in the subsequent slag. On the other hand, in the case that the Al₂O₃ content in the slag is up to 25%, the flowability of the slag is still good under the condition that the smelting temperature exceeds 1400°C, which indicates that the disclosure is very suitable for treating the waste lithium-ion battery with a high aluminum content (e.g., ≥ 5wt.% of Al), e.g., the waste aluminum-shell lithium-ion battery or the waste polymer lithium-ion battery may have about 10% of Al (e.g., 8-15%). As for the treatment of such waste battery having the high aluminum content, since the dissolving capacity of Al₂O₃ in the slag is high, the amount of the slagging agent can be effectively reduced, and the treatment cost of the process can be reduced, accordingly.

In the above method for recycling and treating the waste Mn-containing battery, based on our latest research achievements, it is found that a treated waste Mn-containing battery material generally has a relatively high Al/Mn value. If a Si-containing material is only added to the slagging agent, it is difficult to generate a manganese-rich slag with a high Mn content (≥ 35% of Mn) by one-step smelting. However, if Mn and Si are contained simultaneously in the slagging agent, the total Al/Mn value in the smelting materials may be reduced, thereby guaranteeing the smelting to generate a manganese-rich slag containing ≥35% of Mn. Hence, preferably, the effective slagging elements in the slagging agent include Mn and Si, simultaneously. Although there is no Fe additionally added to the slagging agent, it is generally inevitable for the slagging agent to contain a small amount of Fe. Since the MnO-SiO₂-Al₂O₃ slag type is adopted by the smelting process of the disclosure, the Fe content in the slag may be controlled at 5% or less, which clearly shows that Fe is not a main component of the slag and does not affect the main properties of the slag. In addition, by improving the content of the effective slagging element Si in the slagging agent, the amount of the slagging agent can be obviously reduced, and the economy of the process is improved.

In the method for recycling and treating the waste Mn-containing battery, more preferably, a manganese ore is taken as the slagging agent; and further preferably, the manganese ore contains ≥ 10% of Mn and ≥ 5% of Fe. In a general manganese ore, compared with the Mn content, the Fe content is relatively high and greater than 5% or more, and thus it is difficult to recycle the manganese therein economically and effectively. By taking such manganese ore as the slagging agent of the process, at least 90% of Fe in the manganese ore is reduced and enters into the alloy phase, such that the manganese content in the generated slag may be significantly improved and up to 35% or more, and the Fe content is significantly reduced and lower than 3%. Owing to such slag with the high manganese content and the low iron content, there is almost no need for the deironing process in a subsequent hydrometallurgical process for extracting manganese. Therefore, the smelting process is very suitable for the subsequent manganese recycling. Therefore, such process recycles not only the valuable metals such as Co, Ni and Cu in the waste battery, but the Mn in the battery and the manganese ore; and thus the comprehensive economic and environmental benefits thereof are more significant. Additionally, it is worth mentioning that the manganese ore as the slagging agent will bring about a relatively high content of Fe, but this is not conflict with that the Fe is not added to the slagging agent additionally. This is because almost all Fe in the manganese ore enter into the alloy, and the Fe content in the generated slag may be even lower than 3%, which also means that the Fe is not used as the slagging agent and does not affect the main properties of the slag.

In the method for recycling and treating the waste Mn-containing battery, preferably, the slag contains ≥ 25 wt.% of Mn (more preferably greater than 35 wt.%), ≤ 3wt.% of Fe and 0.8 ≤ Mn/SiO₂ ≤ 2.5. When the contents of the components in the slag reach to the above ranges and meet the national quality requirement on the manganese-rich slag, which provides favorable conditions for recycling the subsequent manganese, so that the comprehensive economic advantage of the process is more obvious. In other words, the generated slag and the alloy both are materials rich in the valuable metals and their economic values are very high; and the manganese ore resource and the waste battery are recycled simultaneously.

In the method for recycling and treating the waste Mn-containing battery, preferably, an addition amount of the slagging agent is 0.3 time or more of the weight of the waste Mn-containing battery, and may be even 0.5 time or more. Under the premise that the smelting process is ensured to be performed smoothly, the addition amount of the slagging agent is reduced as much as possible, so as to further improve the economic benefit of the process.

In the above method for recycling and treating the waste Mn-containing battery, a certain amount of CaO contained in the slagging agent may improve the foaming property of the slag, be beneficial to mass transfer and heat transfer of a melt, and improve the smelting effect (i.e., the Mn-containing slag is of a MnO-SiO₂-Al₂O₃-CaO quaternary smelting slag type). However, excessive CaO will accelerate the reduction of Mn, such that the Mn content in the slag is reduced and it is adverse for generating the manganese-rich slag. Therefore, the CaO in the slag is preferably controlled at a reasonable level. According to our repeated studies and experiments, preferably, the slag contains ≤ 15% of CaO and/or CaO/SiO₂ ≤ 0.8; and more preferably, the slag contains ≤10% of CaO and/or CaO/SiO₂ ≤ 0.5. At this moment, it is equivalent to that the MnO-SiO₂-Al₂O₃-CaO quaternary smelting slag type is adopted, but the CaO content is relatively low.

Compared with the conventional art, the disclosure has the following advantages.
(1) The recycling and treating method of the disclosure is simple in operation and high in process efficiency. It is not only very suitable for treating a waste Co and/or Ni containing battery and the manganese ore in a large scale, but also very suitable for treating a waste battery having a high Mn content.
(2) The recycling and treating method of the disclosure not only realizes the recycling for the high-value Co and Ni in the waste battery, but also solves the problem of recycling Mn in the battery, as well as the problem of the recycling for the manganese ore difficult to be separated and smelted. The value of the disclosure in recycling economy is greatly improved, and the comprehensive benefit is significant.
(3) In the preferable recycling and treating method of the disclosure, by additionally taking the manganese ore difficult to be separated and smelted as the slagging agent, the characteristic that the battery has excessive reducing materials (metal aluminum and carbon) in itself is fully utilized, such that the high-valence manganese oxides in the manganese ore are reduced to the low-valence MnO which may be dissolved by the sulfuric acid. Furthermore, the characteristic that the manganese ore as the slagging agent has relatively high Mn and SiO₂ contents is also utilized. The manganese oxides are adopted to adjust the atmosphere in the furnace and the SiO₂ is adopted to adjust the properties of the slag, such that the slag has appropriate smelting properties (low melting point, low viscosity, low dissolvability to valuable metals such as Co and Ni). The manganese-rich slag (≥ 25% or even ≥ 35% of Mn, ≤ 3% of Fe) is generated by smelting, and the Mn resource in the slag may be recycled economically and effectively in later, that is, the generated slag and the alloy both are valuable materials and are of high value, and thus the economic benefit of the disclosure is greatly improved.

To sum up, the disclosure fully utilizes the characteristics and complementary advantages of raw materials, and achieves the unification between the economic benefit and the social benefit of the smelting.

### DETAILED DESCRIPTION

For a better understanding of the disclosure, the disclosure will be described more comprehensively in detail with reference to preferred examples hereinafter. However, the protection scope of the disclosure is not limited to the following specific examples.

Unless otherwise defined, all terms used hereinafter have the same meaning generally comprehended by those skilled in the art. The terms used herein are only for illustrating the specific examples and not intended to limit the protection scope of the disclosure.

Unless otherwise specified, various raw materials, agents, instruments, equipment and the like used in the disclosure may all be commercially available or be obtained by means of existing methods.

### Example 1

A method for recycling and treating a waste Co and/or Ni containing battery includes the following steps:

### (1) Material preparation

A waste Co and/or Ni containing battery and a Mn and Si containing slagging agent were prepared. The waste Co and/or Ni containing battery used in the example was a waste Co and Ni containing aluminum-shell lithium-ion battery (8 wt.% of Cu, 16 wt.% of Co, 2 wt.% ofNi, 33 wt.% of Al, 1 wt.% of Fe, 0.1 wt.% of Mn, 10 wt.% of C). The slagging agent in the example was a pyrolusite (33 wt.% of Mn, 7 wt.% of Fe, 33 wt.% of SiO₂, 3.5 wt.% of Al₂O₃, 3.3 wt.% of CaO; the Mn existed in the form of MnO₂), in which the effective slagging elements were Mn and Si, and the pyrolusite inevitably contained Fe. Additionally, the amount of the slagging agent was 3.0 times of the weight of the waste Co and/or Ni containing battery.

### (2) Smelting

The above prepared various materials were added to an electric furnace for smelting, and the various materials added to the smelting furnace further included a metallurgical coke added additionally. The oxygen partial pressure in the electric furnace was controlled by adjusting an amount of a reducing agent and/or an oxidizing agent in the materials added to the furnace. The smelting temperature was controlled at 1500°C by controlling the oxygen partial pressure in the electric furnace, and the duration time was 15 min. When the slag and the alloy melt were completely separated, the high temperature alloy and slag were respectively discharged from an alloy port and a slag discharge port, to obtain a Cu, Co and Ni containing alloy, a Mn-containing slag and a dust. In the generated alloy, the recycling rates of Co, Ni, Cu and Fe were 96.8%, 97.5%, 95.8% and 96.3% (90% or more of Fe entered into the Co and/or Ni containing alloy), respectively. The slag generated from the smelting consisted of 0.41 wt.% of Co, 0.02 wt.% of Ni, 0.38 wt.% of Cu, 34 wt.% of Mn, 2.3 wt.% of Fe, 32.2 wt.% of SiO₂, 20.09 wt.% of Al₂O₃ and 5.8 wt.% of CaO, in which Mn/SiO₂=1.05, CaO/SiO₂=0.18, and the Mn existed in the form of MnO.

In the example, the pyrolusite having a high Fe content (7 wt.% of Fe) was converted into a raw material, in which the manganese was suitable for being recycled by a hydrometallurgical process, i.e., a high-manganese slag (Fe content is extremely low, and only 2.3 wt.%). Moreover, the Mn in the slag existed in the form of MnO, which can be directly leached by sulfuric acid. Therefore, the comprehensive economic benefit of the process was significant.

### Example 2

A method for recycling and treating a waste Co and/or Ni containing battery includes the following steps:

### (1) Material preparation

A waste Co and/or Ni containing battery and a Mn and Si containing slagging agent were prepared. The waste Co and/or Ni containing battery used in the example was the mixture of a waste steel-shell lithium-ion battery (8 wt.% of Cu, 7 wt.% of Co, 8 wt.% of Ni, 5 wt.% of Al, 35 wt.% of Fe, 0.1 wt.% of Mn, 10 wt.% of C) and a waste aluminum-shell lithium-ion battery (8 wt.% of Cu, 16 wt.% of Co, 2 wt.% of Ni, 35 wt.% of Al, 1 wt.% of Fe, 0.1 wt.% of Mn, 10 wt.% of C), in which the waste aluminum-shell lithium-ion battery accounted for 15%. The slagging agent in the example only was a pyrolusite (38 wt.% of Mn, 7 wt.% of Fe, 33 wt.% of SiO₂, 3.5 wt.% of Al₂O₃, 2.9 wt.% of CaO; the Mn existed in the form of MnO₂), in which the effective slagging elements were Mn and Si, and the Fe entrained was not a slagging element and thus did not affect the properties of the subsequent slag. Additionally, the amount of the slagging agent was 0.55 time of the weight of the waste Co and/or Ni containing battery (or total battery materials).

### (2) Smelting

The above prepared various materials were added to an electric furnace for smelting. The oxygen partial pressure in the electric furnace was controlled by adjusting an amount of a reducing agent and/or an oxidizing agent in the materials added to the furnace. The smelting temperature was controlled at 1450°C by controlling the oxygen partial pressure in the electric furnace, and the duration time was 20min. When the slag and the alloy melt were completely separated, the high temperature alloy and slag were respectively discharged from an alloy port and a slag discharge port, to obtain a Cu, Co and Ni containing alloy, a Mn-containing slag and a dust. In the generated alloy, the recycling rates of Co, Ni, Cu and Fe were 96.3%, 96.8%, 96.6% and 98.01% (90% or more of Fe entered into the Co and/or Ni containing alloy), respectively. The slag generated from the smelting consisted of 0.32 wt.% of Co, 0.04 wt.% of Ni, 0.28 wt.% of Cu, 40.6 wt.% of Mn, 0.6 wt.% of Fe, 22 wt.% of SiO₂, 15.33 wt.% of Al₂O₃ and 2.9 wt.% of CaO, in which Mn/SiO₂=1.84, CaO/SiO₂=0.13, and the Mn existed in the form of MnO.

In the example, the generated slag had a high Mn content up to 40.6%, and a Fe content lower than 3%, such that the national quality requirement on the manganese-rich slag were met. That is, the slag and the alloy both were valuable materials and of high value. Therefore, the comprehensive economic benefit was significantly improved.

### Example 3

A method for recycling and treating a waste Co and/or Ni containing battery includes the following steps:

### (1) Material preparation

A waste Co and/or Ni containing battery and a Mn and Si containing slagging agent were prepared. The waste Co and/or Ni containing battery used in the example was the mixture of a waste polymer lithium-ion battery (9 wt.% of Cu, 16 wt.% of Co, 0.1 wt.% of Ni, 15 wt.% of Al, 1 wt.% of Fe, 0.1 wt.% of Mn, 29 wt.% of C) and a waste aluminum-shell lithium-ion battery (8 wt.% of Cu, 16 wt.% of Co, 2 wt.% of Ni, 35 wt.% of Al, 1 wt.% of Fe, 0.1 wt.% of Mn, 10 wt.% of C), in which the waste polymer lithium-ion battery accounted for 50%. The slagging agent in the example was a mixture of a high-iron manganese ore (31 wt.% of Mn, 27 wt.% of Fe, 35 wt.% of SiO₂, 4.5 wt.% of Al₂O₃, 8.3 wt.% of CaO), a lean manganese ore (16 wt.% of Mn, 11 wt.% of Fe, 18 wt.% of SiO₂, 3.6 wt.% of Al₂O₃, 5.6 wt.% of CaO; the Mn existed in the form of MnO₂) and a silica (98wt.% of SiO₂), in which the high-iron manganese ore accounted for 55%, the lean manganese ore accounted for 35% and the silica accounted for 10%, and in which the effective slagging elements were Mn and Si, and the Fe entrained was not a slagging element and thus did not affect the properties of the subsequent slag. Additionally, the amount of the slagging agent was 2.6 time of the weight of the waste Co and/or Ni containing battery (or total battery materials).

### (2) Smelting

The above prepared various materials were added to an electric furnace for smelting. The oxygen partial pressure in the electric furnace was controlled by adjusting an amount of a reducing agent and/or an oxidizing agent in the materials added to the furnace. The smelting temperature was controlled at 1425°C by controlling the oxygen partial pressure in the electric furnace, and the duration time was 30min. When the slag and the alloy melt were completely separated, the high temperature alloy and slag were respectively discharged from an alloy port and a slag discharge port, to obtain a Cu, Co and Ni containing alloy, a Mn-containing slag and a dust. In the generated alloy, the recycling rates of Co, Ni, Cu and Fe were 96.9%, 97.5%, 97.2% and 98.02% (90% or more of Fe entered into the Co and/or Ni containing alloy), respectively. The slag generated from the smelting consisted of 0.23 wt.% of Co, 0.03 wt.% of Ni, 0.31 wt.% of Cu, 32.15 wt.% of Mn, 1.45 wt.% of Fe, 36.82 wt.% of SiO₂, 22.53 wt.% of Al₂O₃ and 12.9 wt.% of CaO, in which Mn/SiO₂=0.87, CaO/SiO₂=0.35, and the Mn existed in the form of MnO.

In the example, the generated slag had a high Mn content up to 32.15%, and a Fe content lower than 3%, such that the national quality requirement on the manganese-rich slag were met. That is, the slag and the alloy both were valuable materials and of high value. Therefore, the comprehensive economic benefit was significantly improved.

### Example 4

A method for recycling and treating a waste Mn-containing battery includes the following steps:

### (1) Material preparation

A waste Mn-containing battery and a Si containing slagging agent were prepared. The waste Mn-containing battery used in the example was the mixture of a waste Mn-containing polymer lithium-ion battery (9 wt.% of Cu, 5 wt.% of Co, 1 wt.% of Ni, 15 wt.% of Al, 1 wt.% of Fe, 22 wt.% of Mn, 19 wt.% of C) and a waste steel-shell lithium-ion battery that almost had no Mn (8 wt.% of Cu, 15 wt.% of Co, 2 wt.% of Ni, 5 wt.% of Al, 30 wt.% of Fe, 0.2 wt.% of Mn, 11 wt.% of C), in which the waste Mn-containing polymer lithium-ion battery accounted for 70%. The slagging agent in the example was a mixture of a copper smelting slag (0.8 wt.% of Mn, 36.9 wt.% of Fe, 34.5 wt.% of SiO₂, 4.5 wt.% of Al₂O₃, 8.5 wt.% of CaO) and a silica (98wt.% of SiO₂), in which the copper slag accounted for 57% and the silica accounted for 43%, and in which the effective slagging elements only was Si, and the copper smelting slag inevitably contained Fe. Additionally, the amount of the slagging agent was 0.4 time of the weight of the waste Mn-containing battery (or total battery materials).

### (2) Smelting

The above prepared various materials were added to an electric furnace for smelting, and the various materials added to the smelting furnace further included a metallurgical coke added additionally. The oxygen partial pressure in the electric furnace was controlled by adjusting an amount of a reducing agent and/or an oxidizing agent in the materials added to the furnace. The smelting temperature was controlled at 1500°C by controlling the oxygen partial pressure in the electric furnace, and the duration time was 15 min. When the slag and the alloy melt were completely separated, the high temperature alloy and slag were respectively discharged from an alloy port and a slag discharge port, to obtain a Cu, Co and Ni containing alloy, a Mn-containing slag and a dust. In the generated alloy, the recycling rates of Co, Ni, Cu and Fe were 97.5%, 97.9%, 95.5% and 95.60%, respectively. The slag generated from the smelting consisted of 0.45 wt.% of Co, 0.02 wt.% of Ni, 0.50 wt.% of Cu, 17.98 wt.% of Mn, 2.8 wt.% of Fe, 33.51 wt.% of SiO₂, 21.54 wt.% of Al₂O₃ and 12.6 wt.% of CaO, in which Mn/SiO₂=0.54, CaO/SiO₂=0.38, and the Mn existed in the form of MnO.

In the example, the amount of the slagging agent was only 0.4 time of the weight of the Mn-containing waste battery, which was far lower than a consumption amount of the slagging agent in prior art; and the slag only contained 0.50% of Cu, and the copper in the battery and the copper smelting slag were recycled simultaneously. Therefore, the economic benefit is significant.

### Example 5

A method for recycling and treating a waste Mn-containing battery includes the following steps:

### (1) Material preparation

A waste Mn-containing battery and a Si containing slagging agent were prepared. The waste Mn-containing battery used in the example was the mixture of a waste Mn-containing polymer lithium-ion battery (9 wt.% of Cu, 5 wt.% of Co, 1 wt.% of Ni, 15 wt.% of Al, 1 wt.% of Fe, 22 wt.% of Mn, 19 wt.% of C) and a waste aluminum-shell lithium-ion battery that almost had no Mn (8 wt.% of Cu, 16 wt.% of Co, 2 wt.% of Ni, 35 wt.% of Al, 1 wt.% of Fe, 0.1 wt.% of Mn, 10 wt.% of C), in which the waste Mn-containing polymer lithium-ion battery accounted for 50%. The slagging agent in the example only was a manganese ore (33 wt.% of Mn, 7 wt.% of Fe, 33 wt.% of SiO₂, 3.5 wt.% of Al₂O₃, 2.9 wt.% of CaO), in which the effective slagging elements were Mn and Si, and the Fe entrained was not a slagging element and thus did not affect the properties of the subsequent slag. Additionally, the amount of the slagging agent was 2 time of the weight of the waste Mn-containing battery (or total battery materials).

### (2) Smelting

The above prepared various materials were added to an electric furnace for smelting. The oxygen partial pressure in the electric furnace was controlled by adjusting an amount of a reducing agent and/or an oxidizing agent in the materials added to the furnace. The smelting temperature was controlled at 1450°C by controlling the oxygen partial pressure in the electric furnace, and the duration time was 20min. When the slag and the alloy melt were completely separated, the high temperature alloy and slag were respectively discharged from an alloy port and a slag discharge port, to obtain a Cu, Co and Ni containing alloy, a Mn-containing slag and a dust. In the generated alloy, the recycling rates of Co, Ni, Cu and Fe were 96.5%, 97.8%, 95.1% and 96.08%, respectively. The slag generated from the smelting consisted of 0.35 wt.% of Co, 0.04 wt.% of Ni, 0.33 wt.% of Cu, 39.2 wt.% of Mn, 1.09 wt.% of Fe, 20 wt.% of SiO₂, 17.91 wt.% of Al₂O₃ and 3.3 wt.% of CaO, in which Mn/SiO₂=1.95, CaO/SiO₂=0.17.

In the example, the generated slag had a high Mn content up to 39.2%, and a Fe content lower than 3%, such that the national quality requirement on the manganese-rich slag were met. That is, the slag and the alloy both were valuable materials and of high value. Therefore, the comprehensive economic benefit was significantly improved.

### Example 6

A method for recycling and treating a waste Mn-containing battery includes the following steps:

### (1) Material preparation

A waste Mn-containing battery and a Si containing slagging agent were prepared. The waste Mn-containing battery used in the example was the mixture of a waste Mn-containing polymer lithium-ion battery (9 wt.% of Cu, 5 wt.% of Co, 1 wt.% of Ni, 15 wt.% of Al, 1 wt.% of Fe, 22 wt.% of Mn, 19 wt.% of C) and a waste aluminum-shell lithium-ion battery that almost had no Mn (8 wt.% of Cu, 16 wt.% of Co, 2 wt.% of Ni, 35 wt.% of Al, 1 wt.% of Fe, 0.1 wt.% of Mn, 10 wt.% of C), in which the waste Mn-containing polymer lithium-ion battery material accounted for 50%. The slagging agent in the example was a mixture of a pyrolusite (33 wt.% of Mn, 7 wt.% of Fe, 33 wt.% of SiO₂, 3.5 wt.% of Al₂O₃, 8.3 wt.% of CaO), a lean manganese ore (16 wt.% of Mn, 11 wt.% of Fe, 18 wt.% of SiO₂, 3.6 wt.% of Al₂O₃, 5.6 wt.% of CaO) and a silica (98wt.% of SiO₂), in which the pyrolusite accounted for 55%, the lean manganese ore accounted for 35% and the silica accounted for 10%, and in which the effective slagging elements were Mn and Si, and the Fe entrained was not a slagging element and thus did not affect the properties of the subsequent slag. Additionally, the amount of the slagging agent was 2.6 times of the weight of the waste Mn-containing battery (or total battery materials).

### (2) Smelting

The above prepared various materials were added to an electric furnace for smelting. The oxygen partial pressure in the electric furnace was controlled by adjusting an amount of a reducing agent and/or an oxidizing agent in the materials added to the furnace. The smelting temperature was controlled at 1425°C by controlling the oxygen partial pressure in the electric furnace, and the duration time was 30min. When the slag and the alloy melt were completely separated, the high temperature alloy and slag were respectively discharged from an alloy port and a slag discharge port, to obtain a Cu, Co and Ni containing alloy, a Mn-containing slag and a dust. In the generated alloy, the recycling rates of Co, Ni, Cu and Fe were 97.3%, 98.3%, 96.2% and 96.68%, respectively. The slag generated from the smelting consisted of 0.15 wt.% of Co, 0.03 wt.% of Ni, 0.28 wt.% of Cu, 38.25 wt.% of Mn, 0.35 wt.% of Fe, 33.01 wt.% of SiO₂, 21.82 wt.% of Al₂O₃ and 7.2 wt.% of CaO, in which Mn/SiO₂=1.15, CaO/SiO₂=0.22.

In the example, the generated slag had a high Mn content up to 38.25%, and a Fe content lower than 3%, such that the national quality requirement on the manganese-rich slag were met. That is, the slag and the alloy both were valuable materials and of high value. Therefore, the comprehensive economic benefit was significantly improved.

## Claims

1. A method for recycling and treating a waste battery, including the following steps:
(1) preparing the waste battery, and additionally preparing a slagging agent at least containing 10 wt.% of Si; and
(2) adding the above prepared various materials to a smelting furnace so as to generate a Co and/or Ni containing alloy, a Mn-containing slag, and dust; and controlling an oxygen partial pressure, a smelting temperature and a duration time in the smelting furnace, such that the generated Mn-containing slag contains ≥ 15 wt.% of Mn, ≤ 5 wt.% of Fe, and ≤ 30 wt.% of Al₂O₃, and 0.2 ≤ Mn/SiO₂ ≤ 3.0;
wherein the Mn-containing slag is of a MnO-SiO₂-Al₂O₃ ternary smelting slag type, the main components in the Mn-containing slag being MnO, SiO₂, and Al₂O₃;
wherein the waste battery is a waste Mn-containing battery containing Mn element, and wherein the waste Mn-containing battery is a waste lithium-ion battery containing 15 wt.% or more of Mn, or a mixture of the waste lithium-ion battery and a waste lithium-ion battery containing less than 3 wt.% of Mn.

2. The method for recycling and treating the waste battery according to claim 1, wherein the waste lithium-ion battery is a waste aluminum-shell lithium-ion battery and/or a waste polymer lithium-ion battery containing 8-15% of Al.

3. A method for recycling and treating a waste battery, including the following steps:
(1) preparing the waste battery, and additionally preparing a slagging agent at least containing 10 wt.% of Si and Mn; and
(2) adding the above prepared various materials to a smelting furnace so as to generate a Co and/or Ni containing alloy, a Mn-containing slag, and dust; and controlling an oxygen partial pressure, a smelting temperature and a duration time in the smelting furnace, such that the generated Mn-containing slag contains ≥ 15 wt.% of Mn, ≤ 5 wt.% of Fe, and ≤ 30 wt.% of Al₂O₃, and 0.2 ≤ Mn/SiO₂ ≤ 3.0;
wherein the Mn-containing slag is of a MnO-SiO₂-Al₂O₃ ternary smelting slag type, the main components in the Mn-containing slag being MnO, SiO₂, and Al₂O₃;
wherein the waste battery is a waste Co and/or Ni containing battery, which almost has no manganese element, and the slagging agent at least contains 10 wt.% of Mn and Si; and wherein, during the smelting, high-valence manganese oxides in the slagging agent are converted into low-valence manganese oxides, which are easily leached by sulfuric acid in the Mn-containing slag, and 90 % or more of Fe contained in the above prepared various materials enter into the Co and/or Ni containing alloy.

4. The method for recycling and treating the waste battery according to claim 3, wherein the waste Co and/or Ni containing battery is a waste lithium-ion battery; and wherein the waste lithium-ion battery is a waste aluminum-shell lithium-ion battery and/or a waste polymer lithium-ion battery containing 8-15% of Al.

5. The method for recycling and treating the waste battery according to any one of claims 1-4, wherein the effective slagging elements in the slagging agent include Mn and Si; Fe is not added additionally as the slagging agent; and the Si content in the slagging agent is improved as much as possible.

6. The method for recycling and treating the waste battery according to claim 5, wherein the slagging agent is a manganese ore, and the manganese ore contains ≥ 10% of Mn and 5% or more of Fe.

7. The method for recycling and treating the waste battery according to any one of claims 1-4, wherein the Mn-containing slag contains ≥ 25 wt.% of Mn and ≤ 5 wt.% of Fe, and 0.8 ≤ Mn/SiO₂ ≤ 2.5.

8. The method for recycling and treating the waste battery according to claim 7, wherein high-valence manganese oxides in the above prepared various materials all are converted into low-valence manganese oxide MnO.

9. The method for recycling and treating the waste battery according to any one of claims 1-4, wherein the addition amount of the slagging agent is 0.25 time or more of the weight of the waste battery.

10. The method for recycling and treating the waste battery according to claim 9, wherein the addition amount of the slagging agent is 0.3 time or more of the weight of the waste battery.

11. The method for recycling and treating the waste battery according to any one of claims 1-4, wherein the Mn-containing slag is of a MnO-SiO₂-Al₂O₃-CaO quaternary smelting slag type, the main components in the Mn-containing slag are MnO, SiO₂, Al₂O₃ and CaO, and the Mn-containing slag contains ≤ 15% of CaO and/or CaO/SiO₂ ≤ 0.8.

12. The method for recycling and treating the waste battery according to any one of claims 1-4, wherein the smelting temperature is controlled at 1350-1600°C, and the duration time is not lower than 10 min.

13. The method for recycling and treating the waste battery according to any one of claims 1-4, wherein the above prepared various materials added to the smelting furnace further include a metallurgical coke additionally added.

14. The method for recycling and treating the waste battery according to any one of claims 1-4, wherein the oxygen partial pressure in the smelting furnace is controlled by means of adjusting the amount of a reducing agent and/or an oxidizing agent in the above prepared various materials added to the smelting furnace, and wherein the reducing agent includes the metallurgical coke or the aluminum in the waste battery.

## Patentansprüche

1. Verfahren zum Recycling und zur Behandlung einer Altbatterie, das die folgenden Schritte einschließt:
(1) Aufbereiten der Altbatterie, und zusätzlich Aufbereiten eines Verschlackungsmittels, das mindestens 10 Gew.-% Si enthält; und
(2) Zusetzen der vorstehenden aufbereiteten verschiedenen Materialien zu einem Schmelzofen, um auf diese Weise eine Co und/oder Ni enthaltende Legierung, eine Mn enthaltende Schlacke und Staub zu erzeugen; und Regeln eines Sauerstoffpartialdrucks, einer Schmelztemperatur und einer Zeitdauer in dem Schmelzofen, derart, dass die erzeugte Mn enthaltende Schlacke ≥ 15 Gew.-% Mn, ≤ 5 Gew.-% Fe und ≤ 30 Gew.-% Al₂O₃ enthält, und 0,2 ≤ Mn/SiO₂ ≤ 3,0;
wobei die Mn enthaltende Schlacke von einem ternären MnO-SiO₂-Al₂O₃-Schmelzschlackentyp ist, wobei die Hauptkomponenten in der Mn enthaltenden Schlacke MnO, SiO₂ und Al₂O₃ sind;
wobei die Altbatterie eine Mn enthaltende Altbatterie, enthaltend Mn-Element, ist, und wobei die Mn enthaltende Altbatterie eine Lithium-Ionen-Altbatterie, enthaltend 15 Gew.-% oder mehr Mn, oder ein Gemisch aus der Lithium-Ionen-Altbatterie und einer Lithium-Ionen-Altbatterie, enthaltend weniger als 3 Gew.-% Mn, ist.

2. Verfahren zum Recycling und zur Behandlung der Altbatterie nach Anspruch 1, wobei die Lithium-Ionen-Altbatterie eine Aluminium-Shell-Lithium-Ionen-Altbatterie und/oder eine Polymer-Lithium-Ionen-Altbatterie, enthaltend 8 % bis 15 % Al, ist.

3. Verfahren zum Recycling und zur Behandlung einer Altbatterie, das die folgenden Schritte einschließt:
(1) Aufbereiten der Altbatterie, und zusätzlich Aufbereiten eines Verschlackungsmittels, das mindestens 10 Gew.-% Si und Mn enthält; und
(2) Zusetzen der vorstehenden aufbereiteten verschiedenen Materialien zu einem Schmelzofen, um auf diese Weise eine Co und/oder Ni enthaltende Legierung, eine Mn enthaltende Schlacke und Staub zu erzeugen; und Regeln eines Sauerstoffpartialdrucks, einer Schmelztemperatur und einer Zeitdauer in dem Schmelzofen, derart, dass die erzeugte Mn enthaltende Schlacke ≥ 15 Gew.-% Mn, ≤ 5 Gew.-% Fe und ≤ 30 Gew.-% Al₂O₃ enthält, und 0,2 ≤ Mn/SiO₂ ≤ 3,0;
wobei die Mn enthaltende Schlacke von einem ternären MnO-SiO₂-Al₂O₃-Schmelzschlackentyp ist, wobei die Hauptkomponenten in der Mn enthaltenden Schlacke MnO, SiO₂ und Al₂O₃ sind;
wobei die Altbatterie eine Co und/oder Ni enthaltende Altbatterie ist, die fast kein Mangan-Element aufweist, und das Verschlackungsmittel mindestens 10 Gew.-% Mn und Si enthält; und wobei, während des Schmelzens, hochvalente Manganoxide in dem Verschlackungsmittel in niedrigvalente Manganoxide umgewandelt werden, die durch Schwefelsäure in der Mn enthaltenden Schlacke leicht ausgelaugt werden, und 90 % oder mehr Fe, das in den vorstehenden aufbereiteten verschiedenen Materialien enthalten ist, in die Co und/oder Ni enthaltende Legierung eintreten.

4. Verfahren zum Recycling und zur Behandlung der Altbatterie nach Anspruch 3, wobei die Co und/oder Ni enthaltende Altbatterie eine Lithium-Ionen-Altbatterie ist; und wobei die Lithium-Ionen-Altbatterie eine Aluminium-Shell-Lithium-Ionen-Altbatterie und/oder eine Polymer-Lithium-Ionen-Altbatterie, enthaltend 8 % bis 15 % Al, ist.

5. Verfahren zum Recycling und zur Behandlung der Altbatterie nach einem der Ansprüche 1 bis 4, wobei die wirksamen Schlackenelemente in dem Verschlackungsmittel Mn und Si einschließen; Fe nicht zusätzlich als das Verschlackungsmittel zugesetzt wird; und der Si-Gehalt in dem Verschlackungsmittel so weitgehend wie möglich verbessert wird.

6. Verfahren zum Recycling und zur Behandlung der Altbatterie nach Anspruch 5, wobei das Verschlackungsmittel ein Manganerz ist und das Manganerz ≥ 10 % Mn und 5 % oder mehr Fe enthält.

7. Verfahren zum Recycling und zur Behandlung der Altbatterie nach einem der Ansprüche 1 bis 4, wobei die Mn enthaltende Schlacke ≥ 25 Gew.-% Mn und ≤ 5 Gew.-% Fe enthält, und 0,8 ≤ Mn/SiO₂ ≤ 2,5.

8. Verfahren zum Recycling und zur Behandlung der Altbatterie nach Anspruch 7, wobei hochvalente Manganoxide in den vorstehenden aufbereiteten verschiedenen Materialien alle in niedrigvalentes Manganoxid MnO umgewandelt werden.

9. Verfahren zum Recycling und zur Behandlung der Altbatterie nach einem der Ansprüche 1 bis 4, wobei die Zusatzmenge des Verschlackungsmittels 0,25-mal das Gewicht oder mehr des Gewichts der Altbatterie beträgt.

10. Verfahren zum Recycling und zur Behandlung der Altbatterie nach Anspruch 9, wobei die Zusatzmenge des Verschlackungsmittels 0,3-mal das Gewicht oder mehr des Gewichts der Altbatterie beträgt.

11. Verfahren zum Recycling und zur Behandlung der Altbatterie nach einem der Ansprüche 1 bis 4, wobei die Mn enthaltende Schlacke von einem quaternären MnO-SiO₂-Al₂O₃-CaO-Schmelzschlackentyp ist, die Hauptkomponenten in der Mn enthaltenden Schlacke MnO, SiO₂, Al₂O₃ und CaO sind und die Mn enthaltende Schlacke ≤ 15 % CaO und/oder CaO/SiO₂ ≤ 0,8 enthält.

12. Verfahren zum Recycling und zur Behandlung der Altbatterie nach einem der Ansprüche 1 bis 4, wobei die Schmelztemperatur auf 1350 °C bis 1600 °C geregelt wird und die Zeitdauer nicht weniger als 10 min beträgt.

13. Verfahren zum Recycling und zur Behandlung der Altbatterie nach einem der Ansprüche 1 bis 4, wobei die vorstehenden aufbereiteten verschiedenen Materialien, die dem Schmelzofen zugesetzt werden, weiter einen zusätzlich zugesetzten metallurgischen Koks einschließen.

14. Verfahren zum Recycling und zur Behandlung der Altbatterie nach einem der Ansprüche 1 bis 4, wobei der Sauerstoffpartialdruck in dem Schmelzofen wie folgt geregelt wird: mittels Anpassen der Menge eines Reduktionsmittels und/oder eines Oxidationsmittels in den vorstehenden aufbereiteten verschiedenen Materialien, die dem Schmelzofen zugesetzt werden, und wobei das Reduktionsmittel den metallurgischen Koks oder das Aluminium in der Altbatterie einschließt.

## Revendications

1. Procédé de recyclage et de traitement d'une pile usagée, comprenant les étapes suivantes :
(1) la préparation de la pile usagée, et en outre la préparation d'un agent de scorification contenant au moins 10 % en poids de Si ; et
(2) l'introduction des divers matériaux préparés ci-dessus dans un four de fusion afin de produire un alliage contenant du Co et/ou du Ni, des scories contenant du Mn, et de la poussière ; et le contrôle d'une pression partielle d'oxygène, d'une température de fusion et d'un temps de séjour dans le four de fusion, de telle sorte que les scories contenant du Mn produites contiennent ≥ 15 % en poids de Mn, ≤ 5 % en poids de Fe, et ≤ 30 % en poids d'Al₂O₃, et 0,2 ≤ Mn/SiO₂ ≤ 3,0 ;
dans lequel les scories contenant du Mn sont des scories de type scories de fusion ternaires MnO-SiO₂-Al₂O₃, les principaux composants des scories contenant du Mn étant MnO, SiO₂ et Al₂O₃ ;
dans lequel la pile usagée est une pile contenant du Mn usagée contenant l'élément Mn, et dans lequel la pile contenant du Mn usagée est une pile lithium-ion usagée contenant 15 % en poids ou plus de Mn, ou un mélange de la pile lithium-ion usagée et d'une pile lithium-ion usagée contenant moins de 3 % en poids de Mn.

2. Procédé de recyclage et de traitement de la pile usagée selon la revendication 1, dans lequel la pile lithium-ion usagée est une pile lithium-ion à coque en aluminium usagée et/ou une pile lithium-ion polymère usagée contenant 8 à 15 % d'Al.

3. Procédé de recyclage et de traitement d'une pile usagée, comprenant les étapes suivantes :
(1) la préparation de la pile usagée, et en outre la préparation d'un agent de scorification contenant au moins 10 % en poids de Si et de Mn ; et
(2) l'introduction des divers matériaux préparés ci-dessus dans un four de fusion afin de produire un alliage contenant du Co et/ou du Ni, des scories contenant du Mn, et de la poussière ; et le contrôle d'une pression partielle d'oxygène, d'une température de fusion et d'un temps de séjour dans le four de fusion, de telle sorte que les scories contenant du Mn produites contiennent ≥ 15 % en poids de Mn, ≤ 5 % en poids de Fe, et ≤ 30 % en poids d'Al₂O₃, et 0,2 ≤ Mn/SiO₂ ≤ 3,0 ;
dans lequel les scories contenant du Mn sont des scories de type scories de fusion ternaires MnO-SiO₂-Al₂O₃, les principaux composants des scories contenant du Mn étant MnO, SiO₂ et Al₂O₃ ;
dans lequel la pile usagée est une pile contenant du Co et/ou du Ni usagée, qui ne présente presque pas d'élément manganèse, et l'agent de scorification contient au moins 10 % en poids de Mn et de Si ; et
dans lequel, durant la fusion, les oxydes de manganèse à haute valence dans l'agent de scorification sont convertis en oxydes de manganèse à faible valence, qui sont facilement lixiviés par de l'acide sulfurique dans les scories contenant du Mn, et 90 % ou plus du Fe contenu dans les divers matériaux préparés ci-dessus pénètrent dans l'alliage contenant du Co et/ou du Ni.

4. Procédé de recyclage et de traitement de la pile usagée selon la revendication 3, dans lequel la pile contenant du Co et/ou du Ni usagée est une pile lithium-ion usagée ; et
dans lequel la pile lithium-ion usagée est une pile lithium-ion à coque en aluminium usagée et/ou une pile lithium-ion polymère usagée contenant 8 à 15 % d'Al.

5. Procédé de recyclage et de traitement de la pile usagée selon l'une quelconque des revendications 1 à 4, dans lequel les éléments de scorification efficaces dans l'agent de scorification comprennent du Mn et du Si ; aucun Fe n'est ajouté en plus comme agent de scorification ; et la teneur en Si dans l'agent de scorification est améliorée autant que possible.

6. Procédé de recyclage et de traitement de la pile usagée selon la revendication 5, dans lequel l'agent de scorification est un minerai de manganèse, et le minerai de manganèse contient ≥ 10 % de Mn et 5 % ou plus de Fe.

7. Procédé de recyclage et de traitement de la pile usagée selon l'une quelconque des revendications 1 à 4, dans lequel les scories contenant du Mn contiennent ≥ 25 % en poids de Mn et ≤ 5 % en poids de Fe, et 0,8 ≤ Mn/SiO₂ ≤ 2,5.

8. Procédé de recyclage et de traitement de la pile usagée selon la revendication 7, dans lequel les oxydes de manganèse à haute valence dans les divers matériaux préparés ci-dessus sont tous convertis en oxydes de manganèse à faible valence MnO.

9. Procédé de recyclage et de traitement de la pile usagée selon l'une quelconque des revendications 1 à 4, dans lequel l'agent de scorification est ajouté dans une quantité de 0,25 fois ou plus le poids de la pile usagée.

10. Procédé de recyclage et de traitement de la pile usagée selon la revendication 9, dans lequel l'agent de scorification est ajouté dans une quantité de 0,3 fois ou plus le poids de la pile usagée.

11. Procédé de recyclage et de traitement de la pile usagée selon l'une quelconque des revendications 1 à 4, dans lequel les scories contenant du Mn sont des scories de type scories de fusion quaternaires MnO-SiO₂-Al₂O₃-CaO, les principaux composants des scories contenant du Mn étant MnO, SiO₂, Al₂O₃ et CaO, et les scories contenant du Mn contenant ≤ 15 % de CaO et/ou CaO/SiO₂ ≤ 0,8.

12. Procédé de recyclage et de traitement de la pile usagée selon l'une quelconque des revendications 1 à 4, dans lequel la température de fusion est contrôlée de façon à se trouver dans une plage de 1 350 à 1 600 °C, et le temps de séjour n'est pas inférieur à 10 min.

13. Procédé de recyclage et de traitement de la pile usagée selon l'une quelconque des revendications 1 à 4, dans lequel les divers matériaux préparés ci-dessus qui sont introduits dans le four de fusion comprennent en outre un coke métallurgique ajouté en plus.

14. Procédé de recyclage et de traitement de la pile usagée selon l'une quelconque des revendications 1 à 4, dans lequel la pression partielle d'oxygène dans le four de fusion est contrôlée par ajustement de la quantité d'un agent réducteur et/ou d'un agent oxydant dans les divers matériaux préparés ci-dessus qui sont introduits dans le four de fusion, et dans lequel l'agent réducteur comprend le coke métallurgique ou l'aluminium présent dans la pile usagée.
